# EUROPEAN PATENT SPECIFICATION

(11) **EP 2 778 030 B1**
(45) Date of publication and mention of the grant of the patent: **28.03.2018**
(21) Application number: 13182944.2
(22) Date of filing: 04.09.2013
(51) Int. Cl.: B62J 1/00

(54) **Shell for a bicycle saddle**
Schale für einen Fahrradsattel
Coque pour selle de vélo

(30) Priority: 15.03.2013 TW 102204849
(43) Date of publication of application: 17.09.2014
(73) Proprietor: Velo Enterprise Co., Ltd., Taichung City 437 (TW)
(72) Inventor: Yu, Tsai-Yun, 437 Taichung City (TW)
(74) Representative: Becker Kurig Straus

(56) References cited:
- EP-A1- 0 129 857
- DE-U1-202010 005 282
- FR-A1- 2 513 586
- FR-A1- 2 736 887
- GB-A- 1 167 789
- US-A1- 2005 046 247

## Description

### BACKGROUND OF THE INVENTION

### 1. Field of the Invention

The present invention relates generally to a saddle or seat of a vehicle, and more particularly to a shell or support with a holding portion for such saddles or seats.

### 2. Description of the Related Art

It is well known that the conventional vehicle saddles or seats, such as bicycle or motorized bicycle saddles, are often positioned at the middle portion of the bicycles not only for supporting biker's body but for holding to remove the bicycles when being unridden. However, these prior art saddles are disadvantageous in that they have no suitable places or areas for bikers to easily hold thereon when them want to remove the bicycles with such saddles during unriding time.

Known saddles are described in FR-A-2736887, DE202010005282U and US-A-20050046247. It is an object of the present invention to provide a shell or support for a saddle or seat of a vehicle, with which the saddle can be held in a simple manner to remove the vehicle when it is in a motionless state.

### SUMMARY OF THE INVENTION

The present invention provides a shell for a saddle or seat for a vehicle according to claim 1.

### BRIEF DESCRIPTION OF THE DRAWINGS

The following is a detailed description of preferred embodiments of the present invention with reference to the associated drawings, wherein:
FIG. 1 is a schematic perspective bottom view of a shell for a bicycle saddle which is not according to the invention;
FIG. 2 is a partial sectional view of the shell taken along line 2--2 of FIG. 1;
FIG. 3 is a schematic perspective bottom view of a first embodiment of the shell for a bicycle saddle according to the present invention;
FIG. 4 is a partial sectional view of the shell taken along line 4--4 of FIG. 3, and
FIG. 5 is a schematic perspective bottom view of a second embodiment of the shell for a bicycle saddle according to the present invention.

### DETAILED DESCRIPTION OF PREFERRED EMBODIMENTS

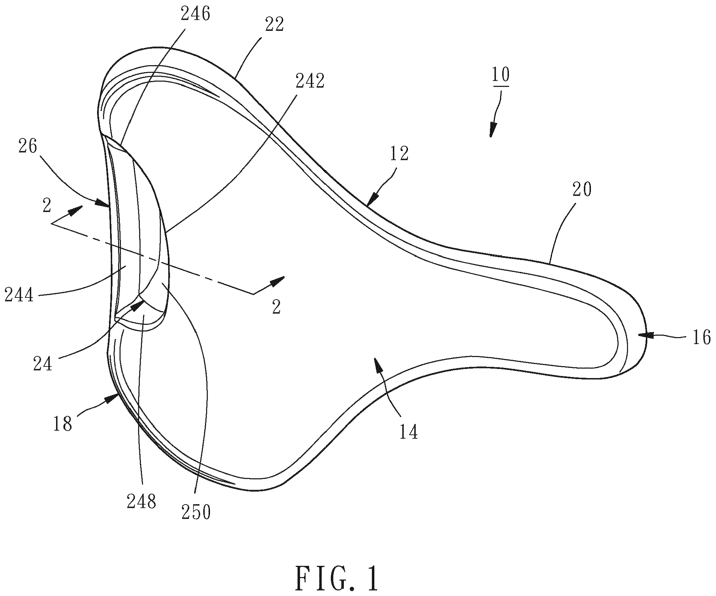

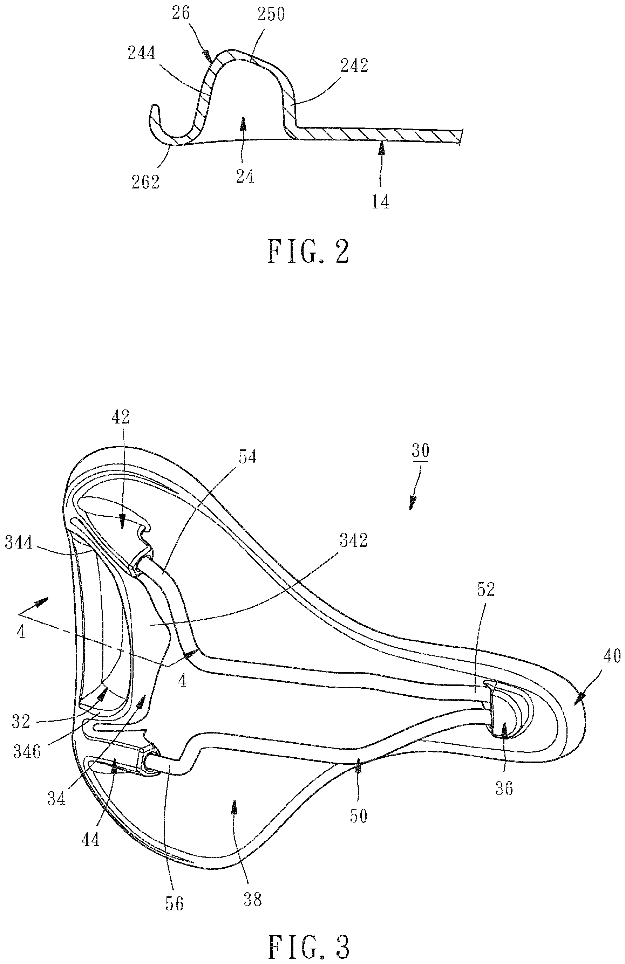

As shown in FIGS. 1-2, a shell 10 for a bicycle saddle comprises a top surface 12, a bottom surface 14, a front end 16 and a rear end 18. The shell 10 is made of rigid plastic materials and contoured to have a narrow front portion 20 and a wide rear portion 22. Furthermore, the shell 10 includes a holding portion 24 disposed on the bottom surface 14 and near the rear end 18. In this embodiment, the holding portion 24 is an opened concave area extending upwardly from the bottom surface 14 to the top surface 12. The concave area 24 includes a front side 242, a rear side 244, a right side 246, a left side 248 and a bottom side 250 to define a suitable space for being held. The rear side 244 of the concave area 24 and the rear end 18 of the shell 10 defines a rear side wall 26 such that a biker's hand can insert into the space defined by the concave area 24 and lean against on the rear side wall as the holding portion is used. For being comfortable to being leant against, the rear wall 26 is designed to have an under curved edge 262 (as shown in FIG.2).

With reference to FIGS.3-4, a shell for a bicycle saddle constructed according to a first embodiment of the present invention is designated as numeral 30. The shell 30 is generally similar to the shell 10 except the differences mentioned below. The first is that the shell 30 has an opened concave area 32 and a rim 34 extending downwardly from the edge of the opening of the concave area 32. The rim 34 includes a front side portion 342, a right side portion 344 and a left side portion 346 such that the concave area 32 can have a depth being deeper than that of the concave 24 of the shell 10 for easily being held. The second is that the shell 30 further includes a front socket 36 disposed on the bottom surface 38 and near the front end 40, a first rear socket 42 located adjacent to the right side portion 344 of the rim 34, and a second rear socket 44 located adjacent to the left side portion 346 of the rim 34 so that a suspension rail 50 of a bicycle saddle can be mounted on the shell 30. Speaking detailedly, the suspension rail 50 has a front end 52 being inserted into the front socket 36, a first rear end 54 being inserted into the first rear socket 42, and a second rear end 56 being inserted into the second rear socket 44(as best seen in FIG.3).

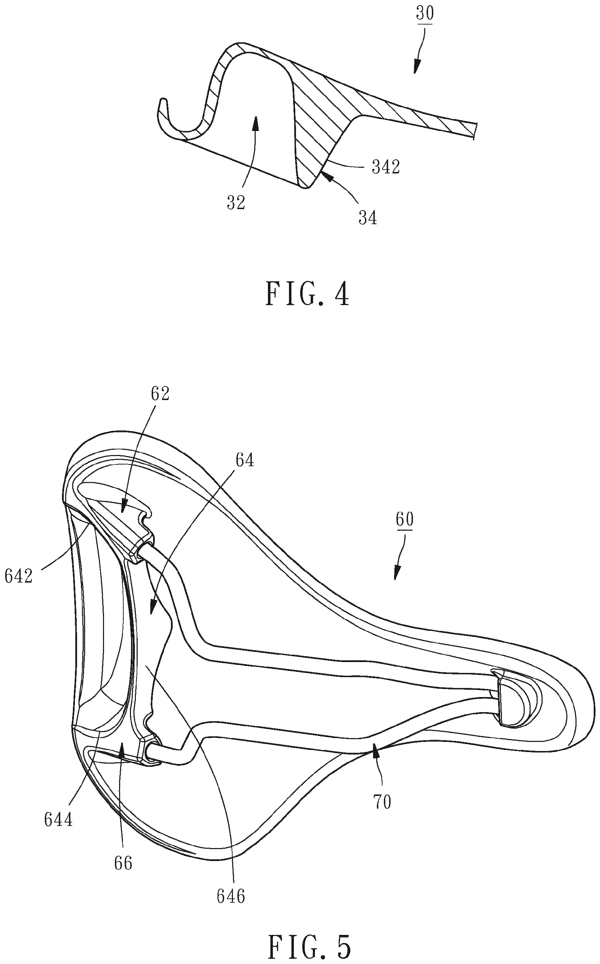

Lastly, please referring to FIG.5, the shell 60 is constructed according to a second embodiment of the present invention. The difference between the shell 60 and the shell 30 is that the first rear socket 62 is connected directly to the right side portion 642 of the rim 64, and the second rear socket 66 is connected directly to the left side portion 644 of the rim 64 so that the first and second rear socket 62, 66 can be bridged directly by the front side portion 646 of the rim 64 for balancedly transmitting the pressure coming from the saddle 60 to the suspension rail 70.

## Claims

1. A shell (30) for a saddle or seat for a vehicle, comprising:
a top surface (12), a bottom surface (14), a front end (16) and a rear end (18);
a narrow front portion (20) and a wide rear portion (22) arranged in order from said front end (16) to said rear end (18); and
a holding portion (24) disposed on said bottom surface (14) and near said rear end (18);
wherein said holding portion (24) includes an opened concave area (32) extending upwardly from said bottom surface (14) and having a front side (242), a rear side (244), a right side (246), a left side (248) and a bottom side (250),
wherein said rear side (244) and said rear end (18) define a rear side wall (26) such that a biker's hand can insert into the space defined by said holding portion (24) and lean against on said rear side wall (26) as said holding portion (24) is used,
wherein said holding portion further includes a rim (34) extending downwardly from the edge of the opening of the concave area (32), said rim (34) includes a right side portion (344), a left side portion (346) and a front side portion (342),
**characterized in that** said shell (30),
further comprising a first rear socket (42) located adjacent to said right side portion (344) of said rim (34), and a second rear socket (44) located adjacent to said left side portion (346) of said rim (34), or
further comprising a first rear socket (42) connected directly to said right side portion (344) of said rim (34), and a second rear socket (44) connected directly to said left side portion (346) of said rim (34),
wherein the rear sockets (42, 44) are adapted to accommodate a suspension rail (50) of a bicycle saddle.

2. The shell of claim 1, wherein said rear side wall (26) has an under curved edge (262).

3. The shell (30) of claim 1, wherein the first rear socket (42) is located adjacent to said right side portion (344) of said rim (34), and the second rear socket (44) is located adjacent to said left side portion (346) of said rim (34) and the shell (30) further comprises a front socket (36) disposed on said bottom surface of said shell (30) and adjacent to said front end (16) of said shell (30).

## Patentansprüche

1. Hülle (30) für einen Sattel oder Sitz für ein Fahrzeug, welche umfasst:
eine obere Oberfläche (12), eine untere Oberfläche (14), ein vorderes Ende (16) und ein hinteres Ende (18);
einen schmalen Vorderbereich (20) und einen weiten hinteren Bereich (22), die in der Reihenfolge von dem vorderen Ende (16) zu dem hinteren Ende (18) angeordnet sind; und
einen Haltebereich (24), der an der unteren Oberfläche (14) und nahe dem hinteren Ende (18) vorgesehen ist;
worin der Haltebereich (24) einen geöffneten konkaven Bereich (32) umfasst, der sich von der untere Oberfläche (14) nach oben erstreckt und eine Vorderseite (242), eine Rückseite (244), eine rechte Seite (246), eine linke Seite (248) und eine Unterseite (250) aufweist,
worin die Rückseite (244) und das hintere Ende (18) eine Rückseiten-Wand (26) definieren, so dass die Hand eines Fahrers in den Bereich, der durch den Haltebereich (24) definiert ist, gelangen und gegen die Rückseiten-Wand (26) lehnen kann, wenn der Haltebereich (24) verwendet wird,
worin der Haltebereich weiter einen Steg (34) umfasst, der sich nach unten von der Kante der Öffnung des konkaven Bereichs (32) erstreckt, worin der Steg (34) einen rechten Seiten-Bereich (344), einen linken Seiten-Bereich (346) und einen Vorderseiten-Bereich (342) aufweist,
**dadurch gekennzeichnet, dass** die Hülle (30),
weiter eine erste hintere Buchse (42) umfasst, die neben dem rechten Seiten-Bereich (344) des Stegs (34) vorgesehen ist, und eine zweite hintere Buchse (44), die neben dem linken Seiten-Bereich (346) des Stegs (34) vorgesehen ist, oder
weiter eine erste hintere Buchse (42) umfasst, die direkt mit dem rechten Seiten-Bereich (344) des Stegs (34) verbunden ist, und eine zweite hintere Buchse (44), die direkt mit dem linken Seiten-Bereich (346) des Stegs (34) verbunden ist,
worin die hinteren Buchsen (42, 44) angepasst sind, eine Aufhängeschiene (50) eines Fahrradsattels aufzunehmen.

2. Hülle nach Anspruch 1, worin die Rückseiten-Wand (26) eine untere gekrümmte Kante (262) aufweist.

3. Hülle (30) nach Anspruch 1, worin die erste hintere Buchse (42) neben dem rechten Seiten-Bereich (344) des Stegs (34) angeordnet ist, und die zweite hintere Buchse (44) neben dem linken Seiten-Bereich (346) des Stegs (34) angeordnet ist und worin die Hülle (30) weiter eine vordere Buchse (36) umfasst, die auf der unteren Oberfläche der Hülle (30) und neben dem vorderen Ende (16) der Hülle (30) vorgesehen ist.

## Revendications

1. Coque (30) pour une selle ou un siège pour un véhicule, comprenant :
une surface supérieure (12), une surface inférieure (14), une extrémité avant (16) et une extrémité arrière (18) ;
une partie avant étroite (20) et une partie arrière large (22) disposées dans l'ordre de ladite extrémité avant (16) à ladite extrémité arrière (18) ; et
une partie de maintien (24) disposée sur ladite surface inférieure (14) et à proximité de ladite extrémité arrière (18) ;
où ladite partie de maintien (24) comprend une zone concave ouverte (32) s'étendant vers le haut à partir de ladite surface inférieure (14) et ayant un côté avant (242), un côté arrière (244), un côté droit (246), un côté gauche (248) et un côté inférieur (250),
où ledit côté arrière (244) et ladite extrémité arrière (18) définissent une paroi latérale arrière (26) de telle sorte qu'une main de motard peut s'insérer dans l'espace défini par ladite partie de maintien (24) et s'appuyer contre ladite paroi latérale arrière (26) lorsque ladite partie de maintien (24) est utilisée,
où ladite partie de maintien comprend en outre un rebord (34) s'étendant vers le bas à partir du bord de l'ouverture de la zone concave (32), ledit rebord (34) comprenant une partie latérale droite (344), une partie latérale gauche (346) et une partie latérale avant (342),
**caractérisée en ce que** ladite coque (30),
comprend en outre une première douille arrière (42) située adjacente à ladite partie latérale droite (344) dudit rebord (34), et une seconde douille arrière (44) située adjacente à ladite partie latérale gauche (346) dudit rebord (34), ou
comprend en outre, une première douille arrière (42) reliée directement à ladite partie latérale droite (344) dudit rebord (34), et une seconde douille arrière (44) reliée directement à ladite partie latérale gauche (346) dudit rebord (34),
où les douilles arrière (42, 44) sont conçues pour recevoir un rail de suspension (50) d'une selle de bicyclette.

2. Coque selon la revendication 1, dans laquelle ladite paroi latérale arrière (26) présente un bord incurvé inférieur (262).

3. Coque (30) selon la revendication 1, dans laquelle la première douille arrière (42) est située adjacente à ladite partie latérale droite (344) dudit rebord (34), et la seconde douille arrière (44) est située adjacente à ladite partie latérale gauche (346) dudit rebord (34) et la coque (30) comprend en outre une douille avant (36) disposée sur ladite surface inférieure de ladite coque (30) et adjacente à ladite extrémité avant (16) de ladite coque (30).
